(19) Europäisches Patentamt
European Patent Office
Office européen des brevets

(11) EP 3 447 939 A1

(12) EUROPEAN PATENT APPLICATION

(43) Date of publication:
**27.02.2019 Bulletin 2019/09**

(51) Int Cl.:
***H04B 10/61*** *(2013.01)*

(21) Application number: **17306092.2**

(22) Date of filing: **24.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy**
**02610 Espoo (FI)**

(72) Inventors:
- **RIOS MULLER, Rafael**
**91620 Nozay (FR)**
- **RENAUDIER, Jérémie**
**91620 Nozay (FR)**

(74) Representative: **Croonenbroek, Thomas Jakob et al**
**Innovincia**
**11, avenue des Tilleuls**
**74200 Thonon-les-Bains (FR)**

# (54) CARRIER FREQUENCY ESTIMATION METHOD AND ASSOCIATED PROCESSING UNIT, DETECTION METHOD AND ASSOCIATED RECEIVER

(57) The present invention refers to a method for estimating a carrier frequency (105) at the reception of an optical signal modulated in amplitude and phase, the signal comprising a series of modulation symbols and the method comprising:
- computing a $M^{th}$ power of the modulation symbols of the signal (502) wherein the number M is predetermined according to the modulation format in order to remove the modulation effects on the carrier signal, the computation leading to the establishment of $M^{th}$ power resulting states,
- for the different $M^{th}$ power resulting states, applying a predetermined correction factor depending on the phase and/or the amplitude of the given $M^{th}$ power resulting state to provide corrected states (503),
- calculating a predetermined estimator of the carrier frequency offset based on the corrected states (504).

5
11
13
1a
5a
7
5b
3
9

Fig. 3

EP 3 447 939 A1

## Description

## BACKGROUND OF THE INVENTION

The present invention refers to the reception of an optical signal and more specifically to the carrier frequency estimation of an optical signal modulated in amplitude and phase.

In order to increase the spectral efficiency of the signals transmitted in optical networks, high order modulation formats have been developed, such as quadrature amplitude modulation formats. Furthermore, in order to improve the tolerance to additive white Gaussian noise and to get close to the capacity limit of the Gaussian channel defined by the Shannon limit, constellation shaping, wherein the distribution of the states of a constellation is changed from uniform to Gaussian-like has also been developed. However, such constellation shaping has consequences on the other digital signal processing steps applied at the reception. In particular the standard periodogram applied on the fourth power of the constellation symbols cannot be applied for all the modulation formats.

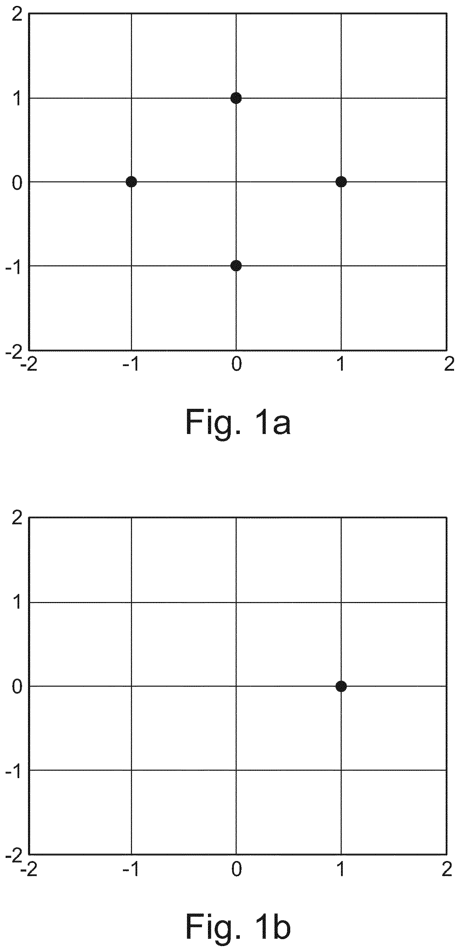

Fig.1a represents the constellation symbols in the case of a Quadrature Phase Shift Keying (QPSK) and Fig.1b represents the results of the application of a fourth power to the constellation symbols of Fig.1a. Only the real and positive part of the constellation symbols remains.

Thus, the frequency offset can be retrieved using the following frequency estimator:

$$\hat{f} = \underset{f}{argmax} \left| \sum_{i=1}^{N} e^{j4arg(y_i)} e^{(-j2\pi 4fi)} \right|$$

with argmax(g(f)) corresponding to the value of f that maximizes the function g(f).

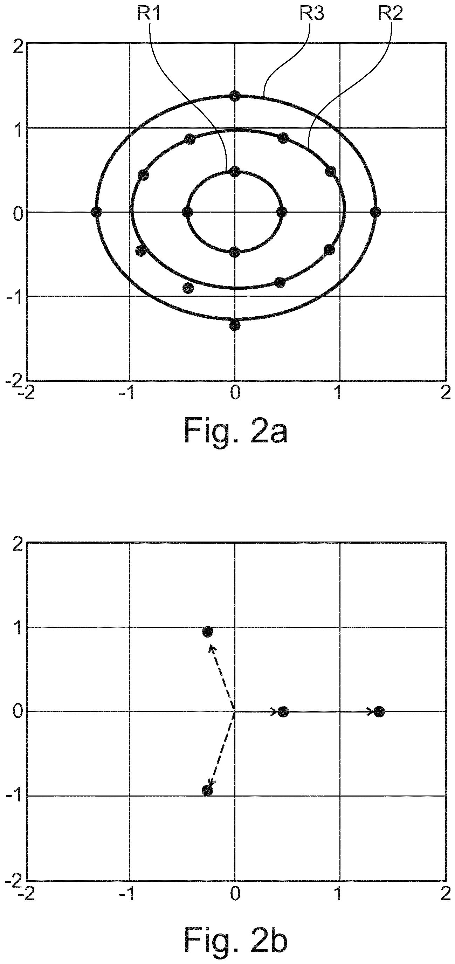

However, in case of a 16-Quadrature Amplitude Modulation (16-QAM) format represented in fig.2a, the application of a fourth power to the constellation symbols leads to the resulting signal of fig.2b wherein non-real and non-positive symbols remain (dotted arrows). The non-real and non-positive symbols correspond to the middle ring symbols of the 16-QAM constellation in fig.2a.

One solution to overcome this problem is to apply a radius directed algorithm wherein some of the received symbols (the symbols from the middle ring, which after the $4^{th}$ power computation are not real and positive) are not taken into account in the carrier frequency estimation. However, such solution requires a long averaging process, as it rejects roughly 50% of the signals, which is not suitable for high speed optical interfaces and is not optimal as a part of the data is not used in the carrier frequency estimation.

## SUMMARY OF THE INVENTION

It is therefore a goal of the present invention to provide a solution enabling carrier frequency estimation in high speed optical networks using constellation shaping.

Thus, the invention refers to a method for estimating a carrier frequency offset at the reception of an optical signal modulated in amplitude and phase, the signal comprising a series of modulation symbols, the method comprising the following steps:

- computing a $M^{th}$ power of the modulation symbols of the signal wherein the number M is predetermined according to the modulation format in order to remove the modulation effects on the carrier signal, the computation leading to the establishment of $M^{th}$ power resulting states,
- for the different $M^{th}$ power resulting states, applying a predetermined correction factor depending on the phase and/or the amplitude of the given $M^{th}$ power resulting state to provide corrected states,
- calculating a predetermined estimator of the carrier frequency offset based on the corrected states.

According to an aspect of the present invention, the modulation format corresponds to a modulation format based on constellation shaping.

According to an aspect of the present invention, the predetermined estimator is the frequency f that maximizes the expression

$$\left| \sum_{i=1}^{N} e^{j4arg(y_i)} e^{-j2\pi 4fi} \right|$$

where j is the imaginary symbol and $y_i$ the transmitted symbol of index i.

According to another aspect of the present invention, the function f is computed for N equally spaced frequencies by a fast fourier transform "FFT" of the corrected states.

According to an aspect of the present invention, the predetermined correction factor is a sign correction factor for the $M^{th}$ power resulting states located in the left hemisphere of the complex plane in the absence of phase and frequency shift.

According to an aspect of the present invention, the sign correction factor depends on the amplitude of the modulation symbols.

According to an aspect of the present invention, the predetermined correction factor is a weighted factor based on a calculated variance of an estimated phase of the different $M^{th}$ power resulting states.

According to an aspect of the present invention, the variance of the estimated phase of the different Mth power resulting states depends on their amplitude.

According to an aspect of the present invention, the modulation format corresponds to a square quadrature amplitude modulation "QAM" format and wherein the number M of the power is equal to four.

According to an aspect of the present invention, the method comprises the following preliminary steps:

- filtering the incoming symbols by amplitude,
- assigning each amplitude level a phase estimator variance,
- assigning each amplitude level a phase estimator sign,
- determining the correction factor based on the assigned phase estimator variance and phase estimator sign.

The present invention also refers to a method for detecting a received optical signal modulated in amplitude and phase wherein the method comprises the following steps:

- a coherent mixing step wherein the received optical signal is mixed with the signal of a local oscillator to produce a mixed signal,
- a conversion step wherein the in-phase and quadrature parts of the different polarizations of the mixed signal are converted to digital signals,
- a deskew and resampling step,
- a chromatic dispersion step,
- a timing recovery step for recovering the frequency of the modulated signal,
- a polarization demultiplexing step,
- a carrier frequency estimation step as described previously,
- a carrier phase estimation step,
- a demapping step.

The present invention also refers to a processing unit configured for estimating a carrier frequency of a received optical signal modulated in amplitude and phase, the signal comprising a series of modulation symbols and the processing unit being configured for:

- computing a $M^{th}$ power of the modulation symbols of the signal wherein the number M is predetermined according to the modulation format in order to remove the modulation effects on the carrier signal, the computation leading to the establishment of $M^{th}$ power resulting states;
- for the resulting states, applying a predetermined correction factor depending on the phase and/or the amplitude of the given $M^{th}$ power resulting states state to provide corrected states,
- calculating a predetermined estimator of the carrier frequency offset based on the corrected states.

The present invention also refers to an optical receiver comprising:

- a coherent mixer linked to a local oscillator and configured for mixing a received signal with the signal of the local oscillator to produce a mixed signal,
- a plurality of photo-diodes for detecting the in-phase and the quadrature parts of the different polarization,
- a plurality of analog-to-digital conversion units associated to the respective plurality of photo-diodes,
- a processing unit as described previously and configured for:
    - applying a deskew and resampling,
    - applying chromatic dispersion compensation,
    - estimating the modulation frequency,
    - applying a constant modulus algorithm for polarization demultiplexing,
    - estimating a carrier phase,
    - applying a demapping.

## BRIEF DESCRIPTION OF THE DRAWINGS

FIG.1a is a constellation diagram corresponding to a QPSK (or 4-QAM) modulation format,
FIG.1b is the constellation diagram of fig.1a after application of a $4^{th}$ power operation,
FIG.2a is a constellation diagram corresponding to a 16-QAM modulation format,
FIG.2b is the constellation diagram of fig.2a after application of a $4^{th}$ power operation,
FIG.3 is a diagram of a receiver,
FIG.4a is a flowchart of the steps of the digital signal processing at the receiver,
FIG.4b is a flowchart of the sub-steps of a frequency offset recovery step,
FIG.5a represents a graph of the number of transmitted symbols as a function of their amplitude in the case of a 16-QAM modulation,
FIG.5b represents a graph of the estimated phase of transmitted symbols as a function of their amplitude in the case of a 16-QAM modulation,
FIG.5c represents a graph of the estimated sign of transmitted symbols as a function of their amplitude in the case of a 16-QAM modulation,
FIG.6a represents a graph of the number of transmitted symbols as a function of their amplitude in the case of a 64-QAM modulation,
FIG.6b represents a graph of the estimated phase of transmitted symbols as a function of their amplitude in the case of a 64-QAM modulation,
FIG.6c represents a graph of the estimated sign of transmitted symbols as a function of their amplitude in the case of a 64-QAM modulation.

## DETAILED DESCRIPTION OF THE INVENTION

The following achievements are examples. Although, the specification refers to one or several embodiments, it does not imply that each reference refers to the same embodiment or that the features apply only to a single embodiment. Simple features of different embodiments can also be combined to provide other embodiments.

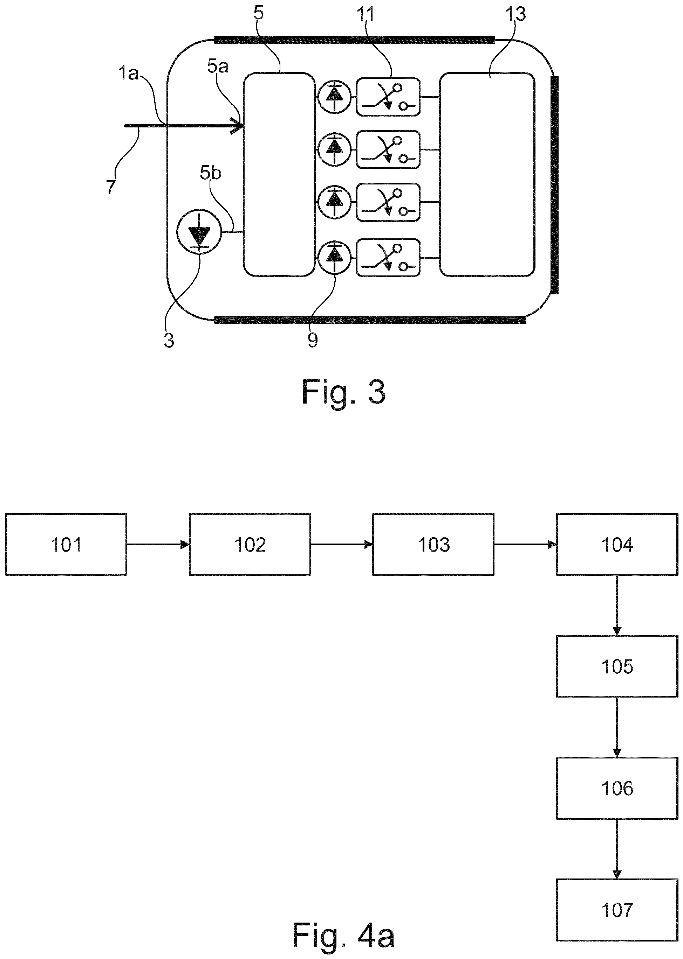

Fig.3 discloses the structure of an optical receiver 1 based on a coherent detection. The optical receiver 1 comprises a local oscillator 3, generally a tunable laser source and a coherent mixer 5. The coherent mixer 5 comprises a first input 5a linked to the input 1a of the optical receiver 1 which is generally connected to an optical transmission mean such as an optical fiber 7 and a second input 5b linked to the local oscillator 3. The local oscillator 3 is set at the same frequency as the signal received on the input 1a in order to enable the detection of the said received signal. The coherent mixer 5 is configured for mixing the incoming signal received from the optical fiber 7 and the signal produced by the local oscillator 3. The optical receiver 1 also comprises a plurality (four in the present case) of optical detectors 9 such as photo-diodes configured for detecting the different parts (in-phase and quadrature parts of the different polarizations) of the mixed signal. The optical receiver 1 also comprises a plurality of analog to digital conversion units 11 configured to convert the signals detected by the optical detectors 9 into digital signals in order to apply digital signal processing on these signals. The optical receiver 1 also comprises a digital processing unit 13. The digital processing unit 13 refers for example to a processor.

Fig.4a represents the different steps of the digital signal processing.

The first step 101 refers to a deskew and resampling step.

The second step 102 refers to a chromatic dispersion step.

The third step 103 refers to a timing recovery step wherein the modulation frequency is recovered.

The fourth step 104 refers to a polarization demultipexing step. Such polarization demultiplexing is for example achieved by a constant modulus algorithm.

The fifth step 105 refers to a frequency offset recovery configured for estimating the data signal frequency of the transmitted signal and for compensating the frequency detuning between the incoming signal frequency and the local oscillator frequency.

The sixth step 106 refers to a carrier phase recovery wherein the phase noise is filtered in order to retrieve the carrier phase.

The seventh step 107 refers to a demapping step wherein the constellation symbols are converted into data bits.

The present invention deals more specifically with the fifth step 105 and the frequency offset recovery when the incoming signal is modulated in amplitude and phase, for example when quadrature phase shift keying (QPSK) or quadrature amplitude modulation (QAM) format are used for the transmission of the optical signals. The present invention is particularly interesting when constellation shaping is used. The present invention refers to the application of a predetermined correction factor on the constellation symbols corresponding to the $M^{th}$ power of the received modulation symbols, the predetermined correction factor being dependent of the amplitude and/or of the phase of the transmitted modulation symbols.

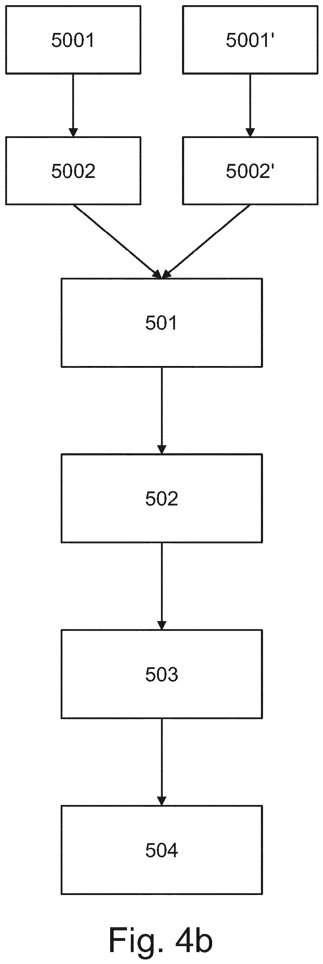

The different sub-steps of the frequency offset recovery step 105 will now be described based on fig.4b.

The first sub-step 501 corresponds to the filtering of the modulation symbols of the incoming signals by amplitude. The amplitude corresponds to the distance of a symbol from the origin in the constellation diagram.

The second sub-step 502 refers to the computation of a $M^{th}$ power of the signal leading to $M^{th}$ power resulting states. The number M is predetermined according to the modulation format in order to remove the modulation effects on the carrier signal. For example, in the case of a square-QAM modulation, such as a 16-QAM modulation, a fourth power can be used. Thus, the periodogram represents the $M^{th}$ power of each of the transmitted symbols.

The third sub-step 503 corresponds to the application of a predetermined correction factor for the different $M^{th}$ power resulting states. The correction factor depends for example on the phase or on the amplitude or both the phase and the amplitude of the given $M^{th}$ power resulting state. The application of the correction factor provides a corrected state.

The fourth sub-step 504 refers to the calculation of a predetermined estimator of the carrier frequency offset based on the corrected states. The predetermined estimator corresponds to the frequency f that maximize the expression defined by: $\left|\sum_{i=1}^{N} e^{j4\,arg(y_i)} e^{-j2\pi 4fi}\right|$.

This sum can be implemented in an efficient manner for a set of N equally-spaced frequencies with the use of the Fast Fourier Transform (FFT) of N points.

According to a first embodiment, the predetermined correction factor in the third sub-step 503 corresponds to a sign correction factor wherein a negative sign is applied to the incoming modulation symbols having a predetermined amplitude. Indeed, the modulation symbols leading to a negative sign are the modulation symbols of the middle ring in the 16-QAM constellation represented in fig.2a. Indeed, with the 16-QAM constellation of fig.2a, the different symbols can be gathered in three rings, an inner ring noted R1, a middle ring noted R2 and an outer ring noted R3, each ring corresponding to a common amplitude of the symbols corresponding to the distance between the symbols of a ring and the origin of the graph. As a consequence, for the received modulation symbols having an amplitude corresponding to the middle ring R2, a negative sign is applied as correction factor. Indeed, these symbols correspond to the $4^{th}$ power resulting states (after application of a $4^{th}$ power operation) that are located in the left hemisphere of the complex plane (states associated with the dotted arrows in fig.2b) so that a sign correction is required to switch them in the right hemisphere of the complex plane. In order to determine the range of amplitude for which a negative sign is applied, many noisy symbols, 16-QAM symbols in the present case, can be studied and classified according to their amplitude.

Furthermore, concerning the fact that the middle ring R2 constellation symbols lead to imaginary symbols when the fourth power is applied as represented by the dotted arrows in fig.2b, it has to be observed that the vectorial sum of these arrows lead to a real value. As a consequence, by applying a negative sign and by summing the contribution of the constellation symbols of the middle ring, it is possible to use their contribution to estimate the frequency offset. In such case, the frequency estimator is given by the frequency f that maximizes the following expression:

$$\left|\left(\sum_{i=1}^{N} f\left(|y_i|\right) e^{j4\,arg(y_i)} e^{-j2\pi 4fi}\right)\right|$$

with $f(|y_i|)$ the sign correction function.

Thus, with such embodiment, a preliminary step 5001 of assigning a sign correction factor to each amplitude level is achieved. Such preliminary step is for example based on statistics made on a high number of transmitted symbols.

The correction factor is then determined based on the assigned sign estimator in an another preliminary step 5002.

According to a second embodiment, the predetermined correction factor corresponds to a sign and variance correction factor. As disclosed previously, the variance function can be determined based on statistics made on many noisy symbols wherein the phase of the noisy symbols after application of a $4^{th}$ power operation is determined and wherein an estimator corresponding to the variance of the obtained phases according to the amplitude of the symbols can then be determined and used as a phase variance estimator which can be used for the transmitted symbols processing.

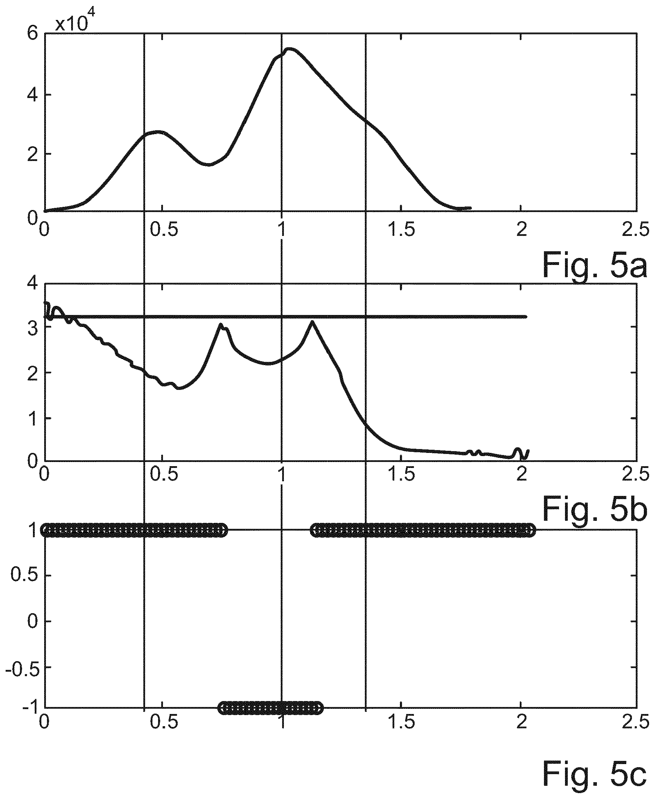

For example, in the case of the 16-QAM modulation, many 16-QAM noisy symbols are considered to produce an amplitude histogram showing the distribution of the different symbols according to their amplitude. Fig.5a represents such histogram. The vertical lines at amplitudes 0.45, 1 and 1.35 represent the theoretical amplitudes of the respectively inner ring R1, middle ring R2 and outer ring R3 of the constellation diagram of fig.2a. The middle ring R2 comprises 8 different symbols whereas the inner R1 and outer R3 rings comprise 4 different symbols which explains a higher peak associated to the amplitude of 1.

Fig.5b represents the variance in the phase estimator as a function of the amplitude, the horizontal line represents the variance in the case of a random phase. The variance appears to be a weighting factor so that the lower the variance, the higher the confidence to the associated symbols.

Fig.5c represents the sign correction factor as a function of the amplitude. The sign factor is either equals to 1 or to -1. Thus, in order to obtain the best estimation for the frequency is to use an estimator combining the variance obtained in fig.5b and the sign obtained in fig.5c. In such case, the estimators are given by the following expressions: and

$$\hat{f}_{\text{sign+var}} = \underset{f}{argmax}\left( \left| \sum_{i=1}^{N} \frac{f\left(|y_i|\right)}{\left(g\,|y_i|\right)} e^{j4\,arg\left(y_i\right)} e^{-j2\pi 4 fi} \right| \right).$$

with $g(|y_i|)$ the variance correction function.

Thus, with such embodiment, a preliminary step 5001' of assigning a sign correction factor and a variance correction factor to each amplitude level is achieved. Such preliminary step is for example based on statistics made on a high number of transmitted symbols. The correction factor is then determined based on the assigned phase correction factor and sign correction factor in an another preliminary step 5002'.

Such estimators enable estimating the frequency offset taking into account the contribution of all the symbols. Furthermore, it can be seen that the higher the amplitude of the symbols, the lower the variance. Indeed, for a given gap between the real position of a symbol and its theoretical position in the periodogram, noise corruption over a symbol having a higher amplitude would lead to a smaller shift of the phase of the symbols and therefore to a better accuracy of the estimated frequency. A higher confidence is therefore given to the symbols of higher amplitude. The variance is also higher in the region where the sign estimator is switched from -1 to 1 (or from 1 to -1), where there is too much uncertainty of which ring the received signal belong.

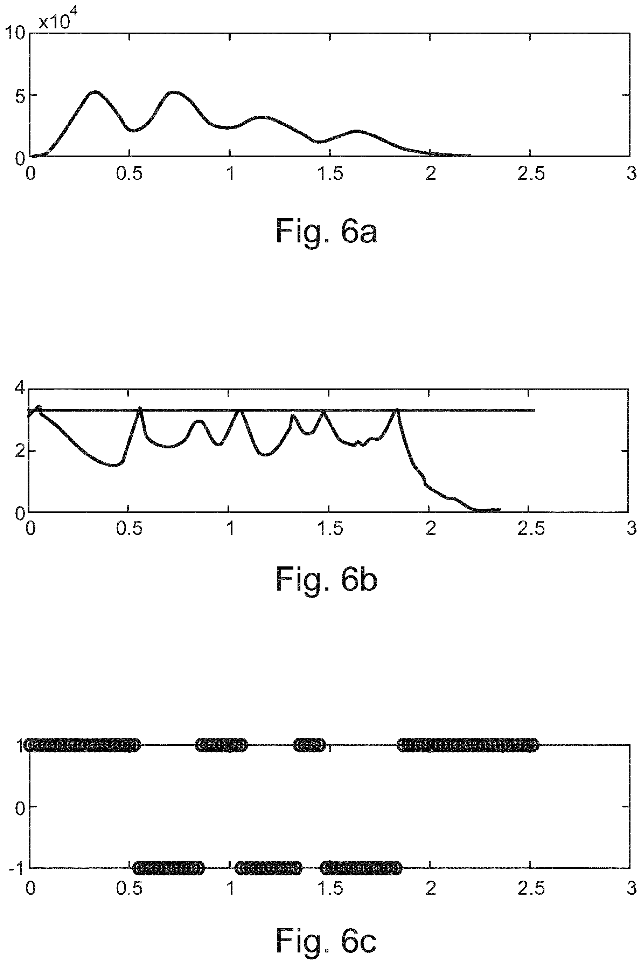

The above disclosed method is not limited to 16-QAM modulation symbols but may be applied to any modulation format comprising a phase and amplitude modulation. Fig.6a, 6b and 6c represent respectively the graphs of the number of symbols, the variance in the phase estimator and the sign estimator (corresponding to the graphs described in FIG. 5 a to 5c) in the case of a transmission based on a 64-QAM modulation format. The 64-QAM modulation format constellation comprises a higher number of rings (seven rings) but the same method can be applied to recover the frequency offset.

The application of a correction factor taking into account the sign and/or the variance enables therefore providing a better estimation of the carrier frequency offset and consequently fewer samples are required to achieve the same estimation performance. The overall quality of the transmission is therefore enhanced.

The functions of the various elements shown in the FIGs., including any functional blocks labeled as "processors" or "processing units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

**1.** Method for estimating a carrier frequency offset (105) at the reception of an optical signal modulated in amplitude and phase, the signal comprising a series of modulation symbols and the method comprising:

- computing a $M^{th}$ power of the modulation symbols of the signal (502) wherein the number M is predetermined according to the modulation format in order to remove the modulation effects on the carrier signal, the computation leading to the establishment of $M^{th}$ power resulting states,

- for the different $M^{th}$ power resulting states, applying a predetermined correction factor depending on the phase and/or the amplitude of the given $M^{th}$ power resulting state to provide corrected states (503),
- calculating a predetermined estimator of the carrier frequency offset based on the corrected states (504).

**2.** Method in accordance with claim 1 wherein the modulation format corresponds to a modulation format based on constellation shaping.

**3.** Method in accordance with claim 1 or 2 wherein the predetermined estimator is the frequency f that maximizes the expression $|\sum_{i=1}^{N} e^{j4arg(y_i)} e^{-j2\pi 4fi}|$ where j is the imaginary symbol and $y_i$ the transmitted symbol of index i.

**4.** Method in accordance with claim 3 wherein the function f is computed for N equally spaced frequencies by a fast fourier transform "FFT" of the corrected states.

**5.** Method in accordance with one of the previous claims wherein the predetermined correction factor is a sign correction factor for the $M^{th}$ power resulting states located in the left hemisphere of the complex plane.

**6.** Method in accordance with one of the previous claims wherein the predetermined correction factor is a weighted factor based on a calculated variance of an estimated phase of the different $M^{th}$ power resulting states.

**7.** Method in accordance with claim 6 wherein the variance of the estimated phase of the different $M^{th}$ power resulting states depends on their amplitude.

**8.** Method in accordance with one of the previous claims wherein the modulation format corresponds to a square quadrature amplitude modulation "QAM" format and wherein the number M of the power is equal to four.

**9.** Method in accordance with one of the previous claims wherein it comprises the following preliminary steps:

- filtering the incoming symbols by amplitude (501),
- assigning each amplitude level a phase estimator variance (5001'),
- assigning each amplitude level a phase estimator sign (5001'), [same thing for the sign?]
- determining the correction factor based on the assigned phase estimator variance and phase estimator sign (5002').

**10.** Method for detecting a received optical signal modulated in amplitude and phase wherein the method comprises the following steps:

- a coherent mixing step wherein the received optical signal is mixed with the signal of a local oscillator (3) to produce a mixed signal,
- a conversion step wherein the in-phase and quadrature parts of the different polarizations of the mixed signal are converted to digital signals,
- a deskew and resampling step (101),
- a chromatic dispersion step (102),
- a timing recovery step for recovering the frequency of the modulated signal (103),
- a polarization demultiplexing step (104),
- a carrier frequency estimation step (105) in accordance with one of the previous claims,
- a carrier phase estimation step (106),
- a demapping step (107).

**11.** Processing unit (13) configured for estimating a carrier frequency offset of a received optical signal modulated in amplitude and phase, the signal comprising a series of modulation symbols and the processing unit (13) being configured for:

- computing a $M^{th}$ power of the modulation symbols of the signal wherein the number M is predetermined according to the modulation format in order to remove the modulation effects on the carrier signal (502), the computation leading to the establishment of $M^{th}$ power resulting states,
- for the different $M^{th}$ power resulting states, applying a predetermined correction factor depending on the phase and/or the amplitude of the given $M^{th}$ power resulting state to provide corrected states (503),
- calculating a predetermined estimator of the carrier frequency offset based on the corrected states (504).

**12.** Optical receiver (1) comprising:

- a coherent mixer (5) linked to a local oscillator (3) and configured for mixing a received signal with the signal of the local oscillator (3) to produce a mixed signal,
- a plurality of photo-diodes (9) for detecting the in-phase and the quadrature parts of the different polarization,
- a plurality of analog-to-digital conversion units (11) associated to the respective plurality of photo-diodes (9),
- a processing unit (13) in accordance with claim 10 also configured for:
- applying a deskew and resampling (101),
- applying chromatic dispersion compensation (102),
- estimating the modulation frequency (103),
- applying a constant modulus algorithm for polarization demultiplexing (104),
- estimating a carrier phase (106),
- applying a demapping (107).

2
1
0
-1
-2
-2
-1
0
1
2

Fig. 1a

2
1
0
-1
-2
-2
-1
0
1
2

Fig. 1b

R1
R3
R2
2
1
0
-1
-2
-2
-1
0
1
2

Fig. 2a

2
1
0
-1
-2
-2
-1
0
1
2

Fig. 2b

5
11
13
1a
5a
7
5b
3
9

Fig. 3

101
102
103
104
105
106
107

Fig. 4a

5001
5001'
5002
5002'
501
502
503
504

Fig. 4b

x10^4
6
4
2
0
0
0.5
1
1.5
2
2.5
4
3
2
1
0
1
0.5
0
-0.5
-1

Fig. 5a

Fig. 5b

Fig. 5c

x10^4
10
5
0
0
0.5
1
1.5
2
2.5
3

Fig. 6a

4
2
0
0
0.5
1
1.5
2
2.5
3

Fig. 6b

1
0
-1
0
0.5
1
1.5
2
2.5
3

Fig. 6c

# EUROPEAN SEARCH REPORT

Application Number
EP 17 30 6092

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | BILAL SYED MUHAMMAD ET AL: "Carrier Phase Estimation Through the Rotation Algorithm for 64-QAM Optical Systems", JOURNAL OF LIGHTWAVE TECHNOLOGY, IEEE SERVICE CENTER, NEW YORK, NY, US, vol. 33, no. 9, 1 May 2015 (2015-05-01), pages 1766-1773, XP011576045, ISSN: 0733-8724, DOI: 10.1109/JLT.2015.2402441 [retrieved on 2015-03-17] | 1-4,6-12 | INV. H04B10/61 |
| A | * page 1768, right-hand column - page 1769, left-hand column * * paragraph [00VI] * | 5 | |
| A | TADAO NAKAGAWA ET AL: "Non-data-aided wide-range frequency offset estimator for QAM optical coherent receivers", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946233, ISBN: 978-1-4577-0213-6 * page 1, paragraph 2 * | 4 | |
| | -/-- | | |
| | | | TECHNICAL FIELDS SEARCHED (IPC) |
| | | | H04B |

The present search report has been drawn up for all claims

| Place of search | Date of completion of the search | Examiner |
|---|---|---|
| Berlin | 22 February 2018 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 17 30 6092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YULIANG GAO ET AL: "Low-complexity two-stage carrier phase estimation for 16-QAM systems using QPSK partitioning and maximum likelihood detection", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946238, ISBN: 978-1-4577-0213-6 * paragraph [0002] * ----- | 6,7,9 | |
| A | US 2015/200731 A1 (BISPLINGHOFF ANDREAS [DE] ET AL) 16 July 2015 (2015-07-16) * paragraph [0027] * ----- | 6,7,9 | |
| | | | TECHNICAL FIELDS SEARCHED (IPC) |

The present search report has been drawn up for all claims

1

| Place of search | Date of completion of the search | Examiner |
|---|---|---|
| Berlin | 22 February 2018 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 30 6092

This annex lists the patent family members relating to the patent documents cited in the above-mentioned European search report. The members are as contained in the European Patent Office EDP file on
The European Patent Office is in no way liable for these particulars which are merely given for the purpose of information.

22-02-2018

| Patent document cited in search report | Publication date | Patent family member(s) | Publication date |
|---|---|---|---|
| US 2015200731 A1 | 16-07-2015 | NONE | |

EPO FORM P0459

For more details about this annex : see Official Journal of the European Patent Office, No. 12/82